(19) Europäisches Patentamt
European Patent Office
Office européen des brevets

(11) **EP 1 292 753 B1**

(12) **EUROPÄISCHE PATENTSCHRIFT**

(45) Veröffentlichungstag und Bekanntmachung des Hinweises auf die Patenterteilung:
**08.08.2007 Patentblatt 2007/32**

(51) Int Cl.:
***E05F 15/16*** *(2006.01)*      ***H02H 7/085*** *(2006.01)*
***G05B 19/40*** *(2006.01)*

(21) Anmeldenummer: **01951541.0**

(22) Anmeldetag: **01.06.2001**

(86) Internationale Anmeldenummer:
**PCT/EP2001/006218**

(87) Internationale Veröffentlichungsnummer:
**WO 2001/094733 (13.12.2001 Gazette 2001/50)**

(54) **VERFAHREN ZUM BESTIMMEN DER DREHSTELLUNG DER ANTRIEBSWELLE EINES GLEICHSTROMMOTORS**

METHOD FOR DETERMINING THE ROTATIONAL POSITION OF THE DRIVE SHAFT OF A DIRECT CURRENT MOTOR

PROCEDE POUR LA DETERMINATION DE LA POSITION DE ROTATION DE L'ARBRE D'ENTRAINEMENT D'UN MOTEUR A COURANT CONTINU

(84) Benannte Vertragsstaaten:
**DE ES FR GB IT**

(30) Priorität: **06.06.2000 DE 10028037**

(43) Veröffentlichungstag der Anmeldung:
**19.03.2003 Patentblatt 2003/12**

(73) Patentinhaber: **Leopold Kostal GmbH & Co. KG**
**58507 Lüdenscheid (DE)**

(72) Erfinder:
• **LUTTER, Thomas**
**59755 Arnsberg (DE)**
• **OTTE, Stefan**
**45549 Sprockhövel (DE)**

(56) Entgegenhaltungen:
**DE-A- 4 138 194**      **DE-A- 19 654 097**
**GB-A- 2 221 769**      **US-A- 4 870 333**
**US-A- 5 877 955**

**Beschreibung**

Die Erfindung betrifft ein Verfahren zum Bestimmen der Drehstellung der Antriebswelle eines Gleichstrommotors durch Auswerten der im Ankerstromsignal enthaltenen Stromrippel.

Das Ankerstromsignal eines Gleichstrommotors umfaßt einen sogenannten Gleichanteil sowie einen den Gleichanteil überlagernden Wechselanteil. Der Wechselanteil entsteht bei einem Betrieb des Gleichstrommotors infolge des Zusammenwirkens von Magnet (Feld), Ankerwicklung, Kommutator des Gleichstrommotors. Dies äußert sich in einer kurzzeitigen Änderung der induzierten Spannung, woraus sich die Welligkeit des Ankerstromsignals ergibt. Die in dem Ankerstromsignal enthaltenen Stromspitzen - im folgenden Stromrippel genannt - treten bei einer Umdrehung des Ankers in einer der Anzahl der Kollektorlamellen entsprechenden Häufigkeit auf. Weist beispielsweise der Anker 10 Kollektorlamellen auf, sind im Ankerstromsignal entsprechend 10 Stromrippel zu erkennen. Eine Zählung der Stromrippel kann somit Aufschluß über die aktuelle Drehstellung des Ankers des Gleichstrommotors und somit auch bezüglich eines von diesem angetriebenen Elements innerhalb einer vorbestimmten Bewegungsstrecke geben. Zu diesem Zweck wird das analoge Ankerstromsignal digitalisiert, um eine entsprechende Zählung vornehmen zu können.

Eingesetzt werden derartige Verfahren beispielsweise im Kraftfahrzeugbereich zum Steuern eines Verstellantriebes, wie sie beispielsweise für Fensterheber und/oder Schiebedächer vorgesehen sind. Ein wesentliches Element in der Erfassung der Position beispielsweise der Scheibe ist diejenige beim Schließen derselben, bei der der Einklemmschutz abgeschaltet werden kann. Eine solche Abschaltung ist notwendig, damit die Scheibe vollständig in ihren oberen Block und in die dort vorgesehenen Dichtungen einfahren kann, ohne dass infolge der erhöhten Last eine Motorabschaltung erfolgt. Bei einer fehlerhaften Zählung der Stromrippel zur Bestimmung der Position der Scheibe kann es vorkommen, dass der Einklemmschutz zu früh oder zu spät abgeschaltet wird.

Bei einigen elektrischen Fensterhebereinrichtungen mit einer solchen Positionserfassung sind Thermoschalter in die elektrische Verbindung zwischen dem Gleichstrommotor und der Auswerteelektronik bzw. der Spannungsquelle angeordnet. Dies soll ein Überhitzen des Gleichstrommotors veremeiden, etwa im Falle einer fehlerhaften Ansteuerung und die von einer solchen Erhitzung ausgehenden Gefahren reduzieren. Für den Fall, dass der Thermoschalter ausgelöst wird, ist jegliche elektrische Verbindung zwischen dem Gleichstrommotor und der Auswerteelektronik unterbrochen. Eine Betätigung des Thermoschalters hat zur Folge, dass unmittelbar die Bestromung des Gleichstrommotors unterbrochen wird. Dennoch wird der Gleichstrommotor noch eine bestimmte Zeit nachlaufen und nicht sofort zum Stillstand kommen. Dies bedeutet, dass sich der Anker des Gleichstrommotors und entsprechend auch die von dem Gleichstrommotor bewegte Fensterscheibe tatsächlich noch um einen gewissen Betrag weiterbewegt. Eine Positionserfassung im Wege einer Detektion von Stromrippeln zur Berücksichtigung dieses Nachlaufes in der Positionsbestimmung ist jedoch aufgrund der unterbrochenen elektrischen Verbindung zwischen dem Gleichstrommotor und der Auswerteelektronik nicht möglich.

US-Patentschrift 4,870,333 offenbart ein Verfahren zum Bestimmen der Drehstellung der Antriebswelle eines Gleichstrommotors durch Auswerten der im Ankerstromsignal enthaltenen Stromrippel gemäß dem Oberbgriff des vorliegenden Hauptanspruchs.

In US-Patentschrift 5,877,955 ist darüberhinaus ein auf einem Softwaremodell basierendes Verfahren zur Bestimmung der Drehzahl eines Gleichstrommotors beschrieben. Wichtigste Eingangsgrösse dieses Softwaremodells ist die an den Versorgungsanschlüssen des Motors anliegende Gleichspannung, die durch eine Auswerteelektronik gemessen und dem Eingang eines Mikrocontrollers zugeführt wird.

Ausgehend von diesem diskutierten Stand der Technik liegt der Erfindung daher die Aufgabe zugrunde, ein eingangs genanntes, gattungsgemäßes Verfahren dergestalt weiterzubilden, dass auch bei einer plötzlichen Unterbrechung der elektrischen Verbindung zwischen dem Gleichstrommotor und der Auswerteelektronik eine hinreichend genaue Positionsbestimmung bezüglich der Stellung des Ankers des Elektromotors möglich ist.

Diese Aufgabe wird erfindungsgemäß dadurch gelöst, dass im Falle einer Unterbrechung der elektrischen Verbindung zwischen dem Gleichstrommotor und der Auswerteelektronik eine näherungsweise Bestimmung des während des Auslaufs des Ankers des Gleichstrommotors zurückgelegten Drehwinkelbetrages durch eine Ermittlung der Anzahl der voraussichtlich während dieses Auslaufes zu erwartenden Stromrippel unter Heranziehung vor der Unterbrechung erfaßter Kenngrößen eines Referenzstromrippels und/oder des Ankerstroms erfolgt.

Das erfindungsgemäße Verfahren zeichnet sich dadurch aus, dass im Falle einer Unterbrechung der elektrischen Verbindung zwischen dem Gleichstrommotor und der Auswerteelektronik eine näherungsweise Bestimmung - eine Abschätzung - im Hinblick auf die Anzahl der bei einem solchen Motorauslauf zu erwartenden Stromrippel erfolgt. Dabei werden in diese Bestimmung Kenngrößen eines Referenzstromrippels und/oder des Ankerstroms, die den Betrieb des Gleichstrommotors vor der Unterbrechung gekennzeichnet haben, eingebracht. Zur Reduzierung des Berechnungsaufwandes können bestimmte Vereinfachungen vorgesehen sein, etwa dass davon ausgegangen wird, dass die Drehzahlabnahme des Ankers des Gleichstrommotors bis zu seinem Stillstand linear erfolgt.

Den Weg, den der Anker des Gleichstrommotors bei seiner Abschaltung und insbesondere auch bei einer Betätigung eines solchen Thermoschalters zurücklegt, kann durch die nachfolgend wiedergegebene Gleichung beschrieben werden, wobei das Motorantriebsmoment 0 ist:

$$2\pi J \frac{\partial n}{\partial t} + M_{Last} = 0$$

wobei J das Trägheitsmoment des Gleichstrommotors, n die Drehzahl des Gleichstrommotors, t die Zeit und M die Last ist.

Unter der Annahme eines linearen Drehzahlabfalls und der Annahme, dass der Lastmoment gleich dem zuletzt anstehenden Motormoment ist, der wiederum proportional dem Ankerstrom ist, kann eine Abschätzung bezüglich des vom Anker in der Motorauslaufphase zurückgelegten Betrages durch folgende Gleichung unter Bezugnahme auf die zuletzt erfaßten Ankerstromdaten:

$$\frac{\Delta n}{\Delta t} = -\text{Konstante} \bullet I_{An\,ker}$$

mit

$$\frac{\Delta n}{\Delta t} = \frac{n_0 - 0}{0 - T} \quad \text{und} \quad \gamma = \int_0^T n\,\partial t = n \bullet T$$

$$\gamma = \frac{n_0^2}{I_{An\,ker}}$$

wobei T die Periode eines Referenzstromrippel und y der zurückgelegte Drehwinkelbetrag des Ankers ist, oder unter Bezug auf die Periode des zuletzt detektierten Stromrippels:

$$n = \frac{1}{T_{Mot}}$$

$$\gamma = \frac{\text{Konstante}}{I_{An\,ker} \bullet T_{Mot}^2}$$

erfolgen.

Durch das erfindungsgemäße Verfahren kann in hinreichender Genauigkeit auch bei einer plötzlichen Unterbrechung der elektrischen Verbindung zwischen dem Gleichstrommotor und der Auswereelektronik eine hinreichend genaue Positionsbestimmung bezüglich der Stellung des Ankers und entsprechend der Stellung eines von dem Gleichstrommotor angetriebenen Elementes unter Berücksichtigung des vom Anker zuruckgelegten Drehwinkelbetrages während der Auslaufphase erfolgen. Beim vorbekannten Stand der Technik mußte bei einer solchen plötzlichen Unterbrechung eine Renormierung des gesamten Systems erfolgen, so dass der automatische Scheibenhochlauf so lange abgeschaltet worden ist, bis eine solche Renormierung stattgefunden hat. Dies ist beim Gegenstand der Erfindung grundsätzlich nicht mehr notwendig.

**Patentansprüche**

1. Verfahren zum Bestimmen der Drehstellung der Antriebswelle eines Gleichstrommotors durch Auswerten der im Ankerstromsignal enthaltenen Stromrippel, **dadurch gekennzeichnet, dass** im Falle einer Unterbrechung der elektrischen Verbindung zwischen dem Gleichstrommotor und der Auswerteelektronik eine näherungsweise Bestimmung des während des Auslaufs des Ankers des Gleichstrommotors zurückgelegten Drehwinkelbetrages durch eine Ermittlung der Anzahl der voraussichtlich während dieses Auslaufes zu erwartenden Stromrippel unter Heranziehung vor der Unterbrechung erfaßter Kenngrößen eines Referenzstromrippels und/oder des Ankerstroms erfolgt.

2. Verfahren nach Anspruch 1, **dadurch gekennzeichnet, dass** bei der näherungsweisen Bestimmung von einer linearen Drehzahlabnahme während des Auslaufens des Ankers ausgegangen wird.

**Claims**

1. Procedure for determining the rotational position of the drive shaft of a direct current motor by evaluating the current ripples contained in the armature current signal, **characterised by** the fact that in the event of any interruption of the electrical connection between the direct current motor and the evaluation electronics, an approximate determination of the amount of the angle of rotation travelled by the armature of the direct current motor during the coasting phase takes place by means of ascertaining the number of anticipated current ripples expected during this coasting phase, whilst referring to the parameters of a reference current ripple and/or of the armature current detected prior to the interruption.

2. Procedure in accordance with Claim 1, **characterised by** the fact that, for this approximate determination, a linear speed drop is assumed during the coasting phase of the armature.

**Revendications**

1. Procédé pour la détermination de la position de rotation de l'arbre de commande d'un moteur à courant continu par évaluation des ripples de courant contenues dans le signal de courant d'induit, **caractérisé en ce que**, dans le cas d'une interruption de la connexion électrique entre le moteur à courant continu et le système d'évaluation électronique, une détermination approximative de la section d'angle de rotation parcourue pendant la marche par inertie de l'induit du moteur à courant continu est effectuée par une détermination du nombre des ripples de courant escomptées pendant cette marche par inertie en prenant en compte des valeurs caractéristiques d'une ripple de courant de référence et ou du courant d'induit capté avant l'interruption.

2. Procédé selon la revendication 1, **caractérisé en ce que**, lors de la détermination approximative, est prise pour base une diminution de vitesse de rotation linéaire pendant la marche par inertie de l'induit.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4870333 A
- US 5877955 A